**Europäisches Patentamt**

**European Patent Office**

**Office européen des brevets**

(19)

(11) Publication number: **0 130 009**

**A1**

(12) # EUROPEAN PATENT APPLICATION

(21) Application number: **84303943.9**

(22) Date of filing: **12.06.84**

(51) Int. Cl.⁴: **B 62 D 1/18**
**F 16 F 7/12**

(30) Priority: **18.06.83 GB 8316631**

(43) Date of publication of application:
**02.01.85 Bulletin 85/1**

(84) Designated Contracting States:
**BE DE FR GB IT SE**

(71) Applicant: **FORD MOTOR COMPANY LIMITED**
**Eagle Way**
**Brentwood Essex CM13 3BW(GB)**

(84) Designated Contracting States:
**BE GB IT SE**

(71) Applicant: **FORD-WERKE AKTIENGESELLSCHAFT**
**Ottoplatz 2 Postfach 21 03 69**
**D-5000 Köln 21(DE)**

(84) Designated Contracting States:
**DE**

(71) Applicant: **FORD FRANCE SOCIETE ANONYME**
**344 Avenue Napoléon Bonaparte B.P. 307**
**F-92506 Rueil Malmaison Cedex(FR)**

(84) Designated Contracting States:
**FR**

(72) Inventor: **Strutt, Derek William**
**11, Chelmer Lea**
**Great Baddow Chelmsford Essex(GB)**

(74) Representative: **Messulam, Alec Moses et al,**
**A. Messulam & Co. 24 Broadway**
**Leigh on Sea Essex SS9 1BN(GB)**

(54) **Energy absorption arrangement.**

(57) An energy absorption arrangement, for example in a motor vehicle stering column, has a deformable, energy absorbing sleeve (24) fitted externally between abutments (18) and (26) on two relatively movable parts (16), (18). As the parts move telescopically, the sleeve (24) is deformed and absorbs energy, thus slowing down the movement. The sleeve (24) is conveniently of plastics, and can be a composite plastics structure which deforms by disintegration.

FIG.1.

EP 0 130 009 A1

## ENERGY ABSORPTION ARRANGEMENT

This invention relates to an energy absorption arrangement. The arrangement can be used in situations where a movement between two parts is to be accompanied by absorption of energy, generally for the purpose of retarding the movement.

An example of such a situation is in the steering column of a motor vehicle, where the column has to collapse in the event of the driver being thrown against the steering wheel in a crash.

According to the present invention, there is provided an energy absorption arrangement between a first component and a second component, the components being normally held in a fixed relative position and, under abnormal loads, being relatively movable in a telescopic manner, the arrangement comprising means for holding the components in their fixed relative positions, an abutment on the first component, and an abutment on the second component, characterised by an external plastics sleeve which is arranged between the abutments and is adapted to deform to absorb energy as the abutments move towards one another.

The first and second components and the sleeve are preferably concentric. The sleeve may be formed as a composite of different materials which disintegrates when it deforms, in order to enhance its energy absorbing characteristics.

One (or both) of the abutments and/or the respective ends of the sleeve may be shaped so that, on deformation, the sleeve end is diverted away from the abutment. For example, the end of the sleeve may turn back on itself.

According to a second aspect of the invention, there is provided a steering column for a motor vehicle, the column comprising a steering shaft, a decoupling joint in the shaft, a tube surrounding the shaft, a mount adapted to be fixed to the vehicle for supporting the tube in the vehicle, and an energy absorbing platics sleeve surrounding the tube and arranged between the mount, which forms an abutment for one end of the sleeve, and an abutment on the tube, the column being arranged so that, in the event of a crash, the decoupling joint in the shaft decouples and the tube slides relative to the mount so that the abutment on the tube approaches the mount and the sleeve is deformed to absorb energy.

The invention will now be described further, by way of example, with reference to the accompanying drawings, in which:

Figure1 shows, partly in section, a motor vehicle steering column;

Figure 2 is a section on the line A-A from Figure 1; and

Figures 3 to 6 show various alternative sleeve end configurations.

The column shown has a shaft 10 connected at one end to a steering wheel 1 and at the other end 14 to a steering gear. Between the steering wheel and the steering gear, a conventional sliding or decoupling joint shown schematically at 15 is included to allow the shaft to shorten in the event of a crash.

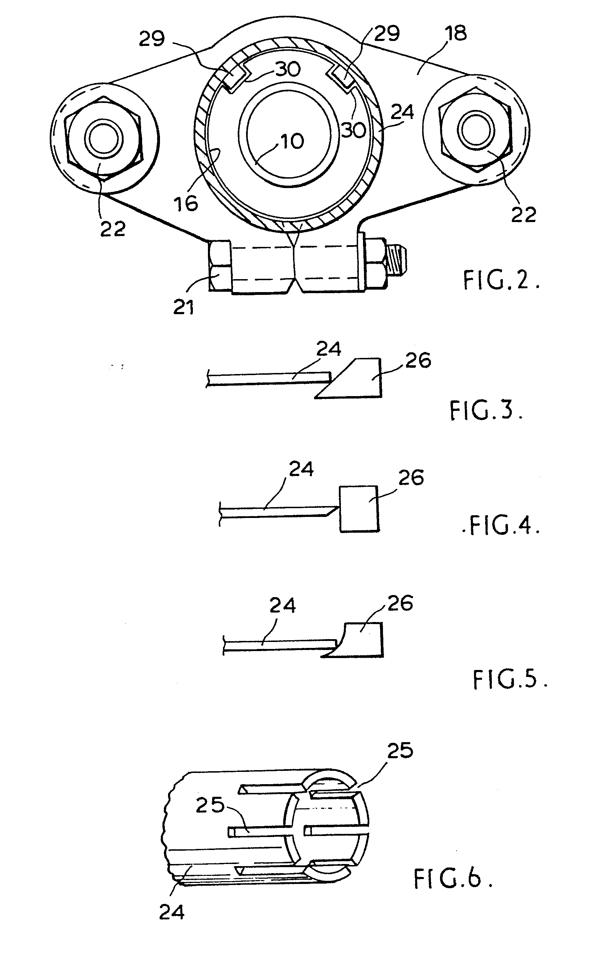

A steel tube 16 surrounds the shaft 10 and is supported in a vehicle by means of a mount 18. The mount 18 is clampled around the tube by a bolt 21, and is attached to a brace 20 forming part of the vehicle bodywork by bolts 22 (see Figure 2). The friction between the mount 18 and the tube 16 is such that the tube is normally held fast, but can slide through the mount under the extraordinary conditions encountered in a crash.

An energy absorbing sleeve 24 surrounds the tube 16. One end of the sleeve 24 abuts the mount 18 while its other end abuts an annular abutment 26 fixed to the tube 16.

In a crash, the driver may be thrown against the steering wheel 12, forcing the wheel and also the shaft 10 and tube 16 towards the front of the car (to the left in the drawing). When this happens, the sliding joint 15 in the shaft 10 slides and the tube 16 begins to slide through the mount 18, so that the energy absorbing sleeve 24 is compressed between its abutments. This causes the sleeve 24 to start to deform, and the material of the sleeve 24 is chosen so that a substantial amount of energy is absorbed as deformation proceeds. It is desirable to have the rate of absorption of energy increase as deformation proceeds, so that the resistance to the collapsing movement of the steering wheel progressively increases.

To assist in energy absorption, two swage indentations 28 are provided in the tube 16 where this is surrounded by the mount 18, and corresponding projections 29 on the mount 18 enter the swages. Such an arrangement prevents rotation of the tube, but can also assist in energy absorption. The swages run out at a position 30, and when the projections 29 reach the run out positions 30, additional deformation, and thus energy absorption must take place. As the relative axial positions of the swage and the projection change in a crash, both must deform (and absorb energy) to allow this change of position.

Any suitable material can be chosen for the sleeve 24, provided that it possesses the necessary energy absorbing characteristics. Normally the material wil be designed to deform by disintegration when it is placed in compression. Suitable materials include fibre reinforced composites. When a sleeve of this material disintegrates, it may remain in one piece, but it will have no strength.

To assist in providing the correct conditions at the end of the sleeve, either the sleeve end or the abutment can be shaped in any one of the ways shown in Figures 3, 4 and 5. In Figure 3, the abutment 26 is tapered to force the sleeve 24 outwards as the two parts are forced together. In Figure 4, the same object is achieved by tapering the end of the sleeve 24. In Figure 5, a curvature is provided to encourage the disintegrating sleeve to turn back on itself.

In Figure 6, elongate slots 25 are provided around the end of the sleeve. These slots alter the energy absorption characteristics when the sleeve first comes under the load.

The formations shown in Figures 3 to 6 can be provided at either one or at both ends of the sleeve, and in any combination.

It will be seen that the sleeve 24 takes no load at all until an axial force greater than any produced in normal operation acts on the column. In normal operation. axial loads are resisted by the friction between the tube 16 and the mount 18. This makes it possible to have high working loads and low collapse loads, so that the arrangement can be easily tuned.

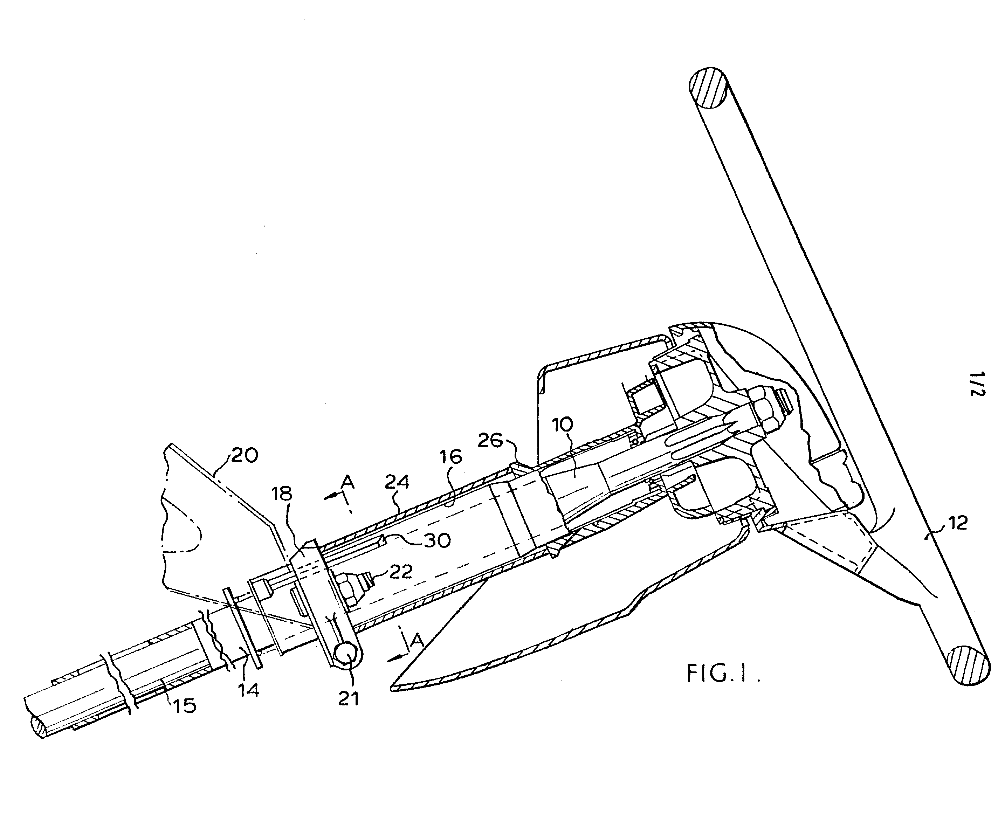

In the arrangement shown in Figure 1, the top end of the steering column is provided with a shroud 32. This figure shows also that the sleeve 24 is external of the steering column itself, and is easily accessible and can readily be inspected. Also, if any disintegration has taken place after an impact, the sleeve can be easily removed and replaced with a fresh sleeve. Neither of these advantages are obtained when an internal sleeve is used.

Materials which absorb energy by disintegration are preferred as they are inherently more satisfactory than ductile materials which absorb energy by deformation. The amount of energy absorbed is easier to control and a wider range of energy absorptions can be obtained by appropriate selection of materials.

Although this energy absorption arrangement has been described in connection with a vehicle steering column, it is anticipated that it could find applications in many other fields, where energy is to be absorbed by relative movement between two components.

## CLAIMS

1.    An energy absorption arrangement between a first component (18) and a second component (16), the components being normally held in a fixed relative position and, under abnormal loads, being relatively movable in a telescopic manner, the arrangement comprising means (21) for holding the components in their fixed relative positions, an abutment on the first component (18), and an abutment (26) on the second component (16), characterised by an external plastics sleeve (24) which is arranged between the abutments and is adapted to deform to absorb energy as the abutments move towards one another.

2.    An arrangement as claimed in Claim 1, wherein the first (18) and second (16) components and the sleeve (24) are concentric.

3.    An arrangement as claimed in Claim 1 or Claim 2, wherein the sleeve (24) is formed as a composite of different materials which disintegrates when it deforms.

4.    An arrangement as claimed in any preceding claim, wherein the interface between one abutment (26) and an end of the sleeve (24) is shaped so that when deformation occurs, the end of the sleeve is diverted away from the abutment.

5.    An arrangement as claimed in any preceding claim, wherein longitudinal slots (25) are formed in an end of the sleeve (24).

6.    A steering colum for a motor vehicle, the column comprising a steering shaft (10), a decoupling joint (15) in th shaft, a tube (16) surrounding the shaft, a mount (18) adapted to be fixed to the vehicle for supporting the tube in the vehicle, characterised in

0130009

that an energy absorbing plastics sleeve (24) surrounds the tube and is arranged between the mount (18), which forms an abutment for one end of the sleeve (24), and an abutment (26) on the tube (16), the column being arrnged so that, in the event of a crash, the decoupling joint (15) in the shaft decouples and the tube (16) slides relative to the mount (18) so that the abutment (26) on the tube (16) approaches the mount (18) and the sleeve (24) is deformed to absorb energy.

7. A steering column as claimed in Claim 6, wherein a longitudinal groove (30) is formed along part of the length of the tube (16), and a projection (29) is formed in the mount (18), the projection (29) extending into the groove (30) in the event of a crash and to absorb energy when it reaches the end of the groove (30).

FIG.I.

FIG.2.

FIG.3.

.FIG.4.

FIG.5.

FIG.6.

# EUROPEAN SEARCH REPORT

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X,Y | US-A-3 545 300 (H. FURUSHO)<br>* Column 1, line 55 - column 2, line 19; figure 3 * | 1,2,5 | B 62 D 1/18<br>F 16 F 7/12 |
| Y | GB-A-1 503 656 (IMPERIAL METAL INDUSTRIES LTD)<br>* Page 2, lines 22-38; figures 1,3,4 * | 5 | |
| A | * Page 2, lines 64-66 * | 1,6 | |
| X | US-A-3 835 725 (H. FURUSHO et al.)<br>* Complete document * | 1,2 | |
| X,Y | US-A-3 980 314 (W. KÖPF)<br>* Complete document * | 6,7 | TECHNICAL FIELDS SEARCHED (Int. Cl. 3) |
| Y | GB-A-1 392 149 (FORD MOTOR CO. LTD)<br>* Page 4, line 111 - page 5, line 8; figures 3,6 * | 7 | B 62 D 1/00<br>F 16 F 7/12 |
| A | EP-A-0 053 284 (MESSERSCHMITT-BÖLKOW-BLOHM-GMBH)<br>* Claim 1 * | 3 | |
| | --- -/- | | |

The present search report has been drawn up for all claims

| Place of search<br>BERLIN | Date of completion of the search<br>06-08-1984 | Examiner<br>PETTI P |
|---|---|---|

0130009

Application number

EP 84 30 3943

# EUROPEAN SEARCH REPORT

### European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | US-D- 360 296 (R.J. SMITH) <br> * Column 3, lines 40-56; figures 4-6 * | 4 | |
| | ----- | | |
| | | | **TECHNICAL FIELDS SEARCHED (Int. Cl. 3)** |

The present search report has been drawn up for all claims

| Place of search | Date of completion of the search | Examiner |
|---|---|---|
| BERLIN | 06-08-1984 | PETTI P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82